# EUROPEAN PATENT SPECIFICATION

(11) **EP 4 159 521 B1**
(45) Date of publication and mention of the grant of the patent: **17.07.2024**
(21) Application number: 22198905.6
(22) Date of filing: 29.09.2022
(51) Int. Cl.: B60L 5/36, B60L 5/38, B60L 5/42

(54) **CONTACT HEAD FOR CURRENT COLLECTOR DESIGNED TO CHARGE ELECTRIC VEHICLES, RAPID CHARGING SYSTEM FOR ELECTRIC VEHICLES AND METHOD FOR ESTABLISHING ELECTRICALLY CONDUCTIVE CONNECTION BETWEEN THE CHARGING STATION AND THE CONTACT HEAD**
KONTAKTKOPF FÜR ELEKTRISCHE FAHRZEUGE, SCHNELLLADESYSTEM UND VERFAHREN ZUR HERSTELLUNG EINER ELEKTRISCH LEITENDEN VERBINDUNG ZWISCHEN DER LADESTATION UND DEM KONTAKTKOPF
TÊTE DE CONTACT POUR COLLECTEUR DE COURANT, SYSTÈME DE CHARGE RAPIDE POUR VÉHICULES ÉLECTRIQUES

(30) Priority: 30.09.2021 PL 43910621
(43) Date of publication of application: 05.04.2023
(73) Proprietor: EC Engineering Spólka Z Ograniczona Odpowiedzialnoscia, 30-150 Krakow (PL)
(72) Inventor: Przepiorski, Bartosz, 31-416 Krakow (PL); Lasiewicz, Bartosz, 31-261 Krakow (PL)
(74) Representative: AOMB Polska Sp. z.o.o.

(56) References cited:
- EP-A1- 3 256 341
- EP-B1- 3 256 341
- DE-A1- 102018 106 047
- US-A- 6 152 273

## Description

### Technical field

The invention relates generally to rapid charging systems for electrically powered vehicles. More particularly, the invention relates to a contact head, being part of a current collector installed on a vehicle roof, enabling rapid, unmanned and safe charging of electrically powered vehicles by connecting the head to a compatible, fixed charging station which is part of the transport infrastructure. The contact head is designed for use in various types of vehicles, in particular for urban and suburban buses using electric or hybrid power, equipped with electrical energy storage devices such as batteries or supercapacitors.

### Background art

Recently, in public transport, solutions related to rapid charging systems for electric passenger vehicles while moving along a predetermined route, are gaining increasing popularity. Thus, various systems and methods are known for rapid charging of vehicle batteries, wherein the charging takes place during a short time while the vehicle is stationary at stops or at the start and end stations, with the use of charging stations that are part of the transport infrastructure - installed within the stop or the start and end stations. Charging is carried out by means of a current collector, e.g. a pantograph, which in its upper part has a head designed for contact with the elements of the charging stations. Various designs of heads for rapid charging of electric vehicles are known from the literature.

For example, EP3359412B1 discloses a quick charging system for electrically driven vehicles and a method for forming an electrically conductive connection between a vehicle and a charging station. The system comprises a charging contact device, intended for contact with a contact device of a charging station, and a positioning device. By means of the positioning device, the contact device arranged on a vehicle can be positioned in the vertical and horizontal direction relative to the contact device in the charging station and it can be moved to the contact position. The contact device has a contact element carrier in the contact position with the charge contact elements, and the contact elements on a vehicle and the contact elements of the station can be electrically contacted to form contact pairs. A guiding device guides the contact elements to the contacting position, wherein the guiding device is designed such that, when the contact device and the charge contact device are brought together, a physical contacting of the contact elements and the charge contact elements is prevented before the contacting position is attained. In general, the contacts here are in the form of a reciprocating lever on the axis of a bolt-shaped electrical contact, and the head is provided with a guiding system with a spacing mechanism and a roll.

Another publication, EP3031104B1, discloses a contact apparatus and a contact unit for a rapid-charging system for electrically driven vehicles and a method for forming an electrically conductive connection between a vehicle and a stationary charging station, wherein the contact apparatus serves to form an electrically conductive connection between the vehicle and the stationary charging station with a charging contact unit, and wherein the contact apparatus comprises a contact device designed to make contact with the contact unit. The contact device or the contact unit comprises a positioning device, wherein the contact device can be positioned relative to the charging contact unit by means of the positioning device. The contact device has a contact element support with contact elements, wherein the contact elements of the charging contact unit can in each case make contact with the contact elements for forming contact pairs, and wherein the contact elements are arranged on the support relative to the charging contact elements such that a defined order is maintained when forming contact pairs when the contact device and the contact unit are combined.

The invention of WO2021037351 discloses a positioning unit for electrically driven vehicles and a method for forming an electrically conductive connection between a vehicle and a charging station. The positioning unit is designed such that it can be installed on a vehicle roof, wherein a contact device of the positioning unit is movable relative to a contact device in the charging station. The positioning unit has the form of an articulated arm with a pivoting mechanism and a drive device for driving the articulated arm.

From a patent application by the same Applicant, EP3256341A1, a rapid charging system for electrically driven vehicles is known. This system includes a current collector installed via an electrically insulated frame on a vehicle roof. In the frame, an arm terminated with a contact head to form an electrically conductive connection with the charging station channel, is bearing-mounted swingingly in the vertical and the horizontal planes. The lifting drive is in the form of an actuator connected to the arm and the turntable through which the arm is bearing-mounted in the frame.

Polish patent PL224554B1, in turn, discloses a connection system for charging batteries of a vehicle, provided with a head connected to a lifting mechanism through a ball joint. The head has a shape similar to a prism and is formed by mechanically connected dielectric holders of a PE contact segment, a positive pole high-current contact segment, a negative pole high-current contact segment and a communication contact segment, inside which holders suitable electrical brushes are mounted slidably on springs. The electrical brushes in their extreme positions protrude from the holder surfaces, the brushes of the PE contact segment protrude from the top surface of the head, whereas the brushes of the positive pole high-current contact segment, the brushes of the negative pole high-current contact segment, and the brush of the communication contact segment protrude from two opposite side surfaces of the head. Inside the body there is at least one dielectric strip mounted slidably, in the direction perpendicular to the opposite sides of the body, running in parallel to these sides of the body. The strip is connected to a drive mounted in the body and holds a negative pole high-current contact rail, a positive pole high-current contact rail, and a communication contact rail. The inner surface of the wall which covers the body from above has conductive properties.

Yet another patent application, EP3606784A1, discloses a contact unit for a quick charging system for electrically driven vehicles and contact device and a quick charging system, wherein the quick charging system comprises a charging contact device and a contact device having a contact unit carrier with the contact unit, wherein a charging contact of the charging contact device can be electrically contacted to the contact unit to form a contact pair. The contact device comprises a positioning device, and the contact unit carrier is positionable relative to the charging contact device by means of the positioning device in such a way that an electrically conductive connection to the vehicle and a stationary charging station can be formed. The contact unit has a contact element, movable relative to the contact unit carrier in the direction of its longitudinal axis in a contact element guide of the contact unit, wherein the contact unit has a connecting lead for connection to the vehicle, wherein the connecting lead is fixed to a contact element.

The patent applications DE1 020181 06047 A1 and US6152273A disclose further solutions for contacting power contacts and disclose arms to which the contacts are attached.

Known solutions require a precise approach to the charging station. Another inconvenience is the different shapes of the charging channels of the charging stations, to which the current collector heads must be adapted, so that when the vehicle is approaching, they are compatibly inserted into the charging channels in a way that allows the flow of electricity. To connect the external devices of the charging unit to a power station with converging guiding walls and conductive strips oriented in at least two planes, the known solutions require to stop the vehicle and carefully carry out the described connection operation, which requires a lot of interference from the vehicle driver. When carrying out the operation of connecting the head of the current collector to the charging station, due to the inadequate arrangement of the contacts coming into contact with the conductive strip, there is a risk that the devices will not be (properly) connected, or that the connection will be carried out with an unsafe sequence of connecting the contacts to the conductive strips, which may lead to a short circuit and, as a result, damage to the charging system.

The purpose of the invention is to propose a current collector head compatible with various rapid charging stations for electric vehicles, having converging walls with conductive strips, which will allow for an easy and, above all, safe connection of external contact devices to the power supply station.

### Summary of the invention

The problems known in the prior art have been solved by the present solution, which is generally based on the coupling of the movement and pressure forces of electrical contacts and the sequence of their connection to the corresponding conductive strips.

The object of the first invention is a contact head for a current collector adapted for charging a vehicle equipped with an electric drive in rapid charging systems, comprising at least two oppositely arranged electrical contacts mounted on at least two pressing elements that are rotatably disposed on at least one axis of rotation with a limited angle of rotation and having at least one resilient element for pressing the electrical contacts against at least two conductive strips of a compatible contact device of a charging station, which conductive strips are arranged on opposite sides of the contact head and through which the power supply voltage is applied, wherein
the pressing elements are formed as opposing arms - a first arm and a second arm;
at least one electrical contact is provided on the first arm;
at least one electrical contact is provided on the second arm;
at least one axis of rotation around which the arms rotate is aligned essentially in the direction of the longitudinal axis of the vehicle, parallel to the direction of vehicle movement;
to the second arm, on an axis parallel to at least one axis of rotation, a third arm is rotatably attached through a resilient element, on which third arm an earthing contact is arranged, the earthing contact being in an extended position and protruding beyond the boundary of the head, so that when connecting the contact head to the charging station, the earthing contact contacts the conductive strip as the first of all contacts;
on one of the arms, from the side facing the conductive strips, a communication contact is provided.

Preferably, the communication contact is arranged on the first arm, on the opposite side of the axis of rotation of the first arm with respect to the electrical contact attached to the same first arm, so that the communication contact contacts the conductive strip of the charging station only after the electrical contacts come into contact with it.

Alternatively, the communication contact is arranged on the second arm, on the opposite side of the axis of rotation of the second arm with respect to the electrical contact attached to the same first arm, so that the communication contact contacts the conductive strip of the charging station only after the electrical contacts come into contact with it.

Preferably, the third arm is made in the form of an arc running under the at least one axis of rotation and coming out on the opposite side of the head.

Preferably, the earthing contact is arranged on the third arm on the side opposite to the axis that holds it.

Preferably, said at least one axis of rotation is mounted in a yoke.

Preferably, the contact head has only one axis of rotation.

Preferably, the adjacent arms are coupled to each other on the axis of rotation by a spring positioned therebetween in a pocket, so that the arms push off each other.

Preferably, the spring is positioned longitudinally to the axis of the vehicle.

Preferably, the spring extends around the axis of rotation.

Preferably, the spring is placed in the pocket and supported on the surfaces of the adjacent arms.

Preferably, the third arm is provided with a spring, placed around the axis on which it is rotatably mounted.

Preferably, the spring is placed in the pocket and supported on the surfaces of the second arm and the third arm.

Preferably, between the arms a limiter is arranged that determines the operating range of the contacts in the vertical plane perpendicular to the axis of rotation.

Preferably, the limiter limits the operating range of the electrical contacts in the plane perpendicular to the axis of rotation to a value between 0 and 20° relative to each other.

Preferably, the limiter limits the operating range of the electrical contacts in the plane perpendicular to the axis of rotation to a value of 10° in both directions with respect to the yoke securing the head, only after the arms rotate relative to each other.

The object of the second invention is a rapid charging system for electrically driven vehicles, comprising:
a contact head;
a current collector installed on a vehicle, provided with a lifting and lowering drive and at least one swivel arm, at the end of which the contact head is attached;
a charging station being part of a stationary transport infrastructure with a compatible contact device for connecting the contact head and establishing a conductive connection, said contact device in the form of a charging channel having an upper wall which is essentially flat, rectangular in shape and horizontally oriented, and two converging side walls connected to side edges of the upper wall and pointing downwards, with longitudinal conductive strips oriented horizontally along the axis of the contact device or the axis of an vehicle on the inner surface of the side walls and the upper wall, cooperating with the corresponding contacts of the contact head,
wherein said rapid charging system has a contact head according to the first invention.

The object of the third invention is also a method for establishing an electrically conductive connection between the conductive strips of the compatible contact device of a charging station and a contact head according to the second invention, wherein electrical contacts move interdependently to determine a safe connection and disconnection sequence, and comprising the following steps:
an earthing contact, located on ta third arm and arranged in an extended position, beyond the boundary of the contact head, comes into contact with conductive strip of a charging channel, which conductive strip is located on an upper wall of the charging channel;
responses from the pressure of the earthing contact against the conductive strip generate a torque acting on a second arm to which the third arm with the earthing contact is attached;
upon pressing against the conductive strips of the charging channel, the arms rotate and the electrical contacts connect to the corresponding conductive strips of the charging channel, which conductive strips are located along side walls;
the contact head takes a nominal position for charging, ensuring contact and pressure against the conductive strips;
a communication contact rises and comes into contact with the conductive strip oriented along the upper wall.

### Advantageous effects of the invention

The present invention allows to eliminate the above-described disadvantages of the known solutions. First of all, the invention allows external devices to be connected to a power station with converging guiding walls and conductive strips oriented in at least two planes in an easy and safe way - eliminating the risk of a possible connection of the head to the charging station with a dangerous sequence of connecting the contacts to the power strips that could result in a short circuit and damage to the devices, and even a threat to the health of people in the vicinity, and at the same time reducing the possibility of not connecting the devices while maintaining wide, compared to other solutions, rotation ranges of the head installation point in the X, Y and Z axes. Further, the developed solution is cheap and easy in operation and requires minimal interference from the vehicle driver.

### Brief description of the drawings

The invention will be now explained in more detail in a preferred embodiment with reference to the accompanying drawings, in which:
Fig. 1 - shows the contact head in an axonometric projection;
Fig. 2 - shows the contact head in a top and cross-sectional view;
Fig. 3 - shows the contact head in a front view, with the dashed line marking the arrangement of the head elements before connecting the head to the charging station, and the solid line marking the arrangement of the head elements when it is connected to the charging station;
Fig. 4 is a side view of a rapid charging system for electric vehicles comprising a contact head according to the invention;
Fig. 5 is a front view of a rapid charging system for electric vehicles comprising a contact head according to the invention.

### Detailed description of the invention

A contact head is intended for use with a current collector for charging electrically driven vehicles, including hybrid vehicles, which are equipped with means for electrical energy storage, such as batteries or supercapacitors. The head is designed in particular for cooperation with vehicles such as urban and suburban buses or trucks, but it is not limited to them. In one aspect of use, the contact head is part of the public transport infrastructure where an urban bus cyclically travels along a predetermined route, stopping at stops with charging stations located within the stop area, allowing the bus batteries to be quickly recharged without the need for a long stop. The contact head is designed to cooperate with charging stations with converging guiding walls and conductive strips oriented in at least two planes.

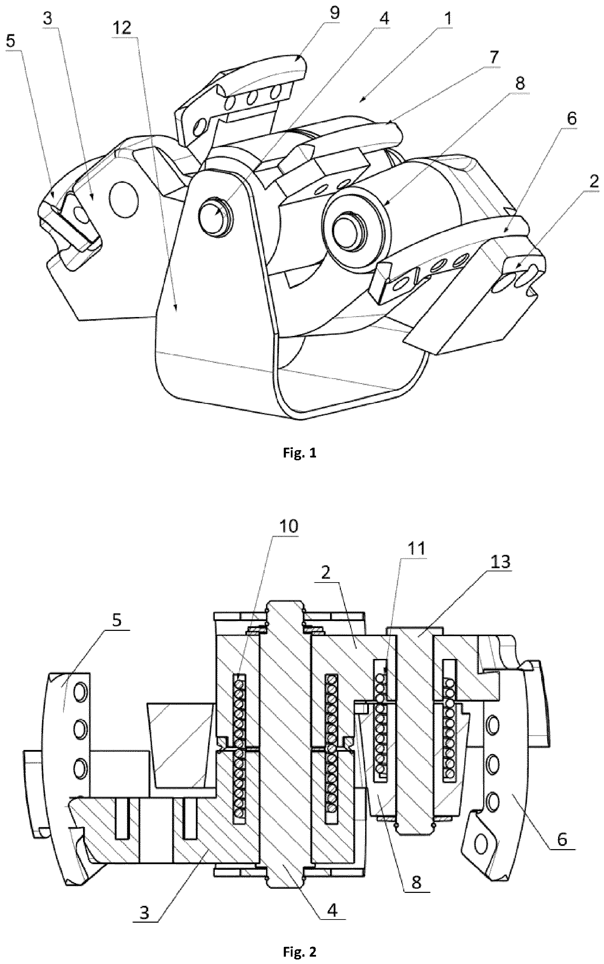

As can be seen in Fig. 1, the device according to the invention, hereinafter referred to as the contact head 1 or, for short, the head 1, consists essentially of two arms 2, 3, hereinafter referred to as the second arm 2 and the first arm 3. In the embodiment of Figs. 1-3, the arms 2, 3 are mounted on a common axis 4, which in the mounted state of the head 1 on the roof of an electric vehicle is positioned along the longitudinal axis of this vehicle, i.e. parallel to the direction of movement of the vehicle. The axis of rotation 4 together with the arms 2, 3 is placed in a yoke 12, which enables the head 1 to be connected to the current collector. The head 1 has thus essentially the form of a two-arm lever rotating around a fixed axis of rotation 4 with a limited angle of rotation, the arms 2, 3 being resiliently mounted around the axis 4.

Fastened to the arms 2, 3 are at least two oppositely arranged electrical (power) contacts 5, 6. More specifically, a electrical contact 5 is fastened to the first arm 3, in a recess provided in its extreme first part, and a electrical contact 6 is attached to the second arm 2, in a recess provided in its second extreme part, wherein both electrical contacts 5, 6 are in the form of arcuate plates arranged with long edges essentially parallel to the axis 4 of rotation. The electrical contacts 5, 6 may be in the form of graphite or carbon straps, brushes, copper strips or other known conductive elements that may be replaceable. The electrical contacts 5, 6 are connected to electrical wires, which supply current to the bus (or another vehicle) batteries or supercapacitors.

A communication contact 7 is provided on the first arm 3, in its upper, second area, and on the part of the first arm 3 which directly surrounds the axis 4. Subsequent rotatable third arm 8, on which an earthing contact 9 is arranged, is provided on the second arm 2.

Fig. 2 shows the contact head 1 in a top and cross-sectional view along the length of the axis 4, which illustrates the internal structure of the head 1 at this location. In an embodiment, the arms 2, 3 are connected to each other by a spring 10, visible here, which ensures that the angle of rotation of the arms 2, 3 matches the conductive strips of the charging station and generates the required contact pressure. The adjacent pressing elements - the arms 2, 3 - are coupled to each other by the spring 10 positioned between them so that these elements repel each other. In an embodiment, the spring 10 is arranged along the axis 4 and extends around this axis 4. The spring 10 is placed in a pocket and supported on the surfaces of the adjacent pressing elements (arms 2, 3). The coupling of the arms 2, 3 enables the force component directed according to the convergence of the station to be decomposed into equal forces pressing against the contacts.

The earthing contact 9, as mentioned, is arranged on the third arm 8, wherein the arm 8 is provided with a resilient element, for example another spring 11. In an embodiment, the spring 11 extends around the axis 13 which secures the arm 8. The earthing contact 9 extends beyond the boundary of the head 1 towards the charging station, such that this alignment provides an earthing connection before the pair of electrical contacts 5, 6. The spring 11 of the arm 8 of the earthing contact 9 provides also for system flexibility as required for connection of all the contacts.

The communication contact 7, as mentioned, is located on the opposite side of the centre of rotation of the first arm 3 relative to the electrical contact 5 attached to the same first arm 3. Due to this, before the arms 2, 3 rotate, the communication contact 7 is in a position far off from the position allowing for contact with the conductive strip of the charging station. In another embodiment, the communication contact 7 can be arranged on the second arm 2, on the opposite side of the axis of rotation of the second arm 2 with respect to the electrical contact 6 attached to the same second arm 2. In this case, the communication contact 7 also contacts the conductive strip of the charging station only after the electrical contacts 5, 6 come into contact with it.

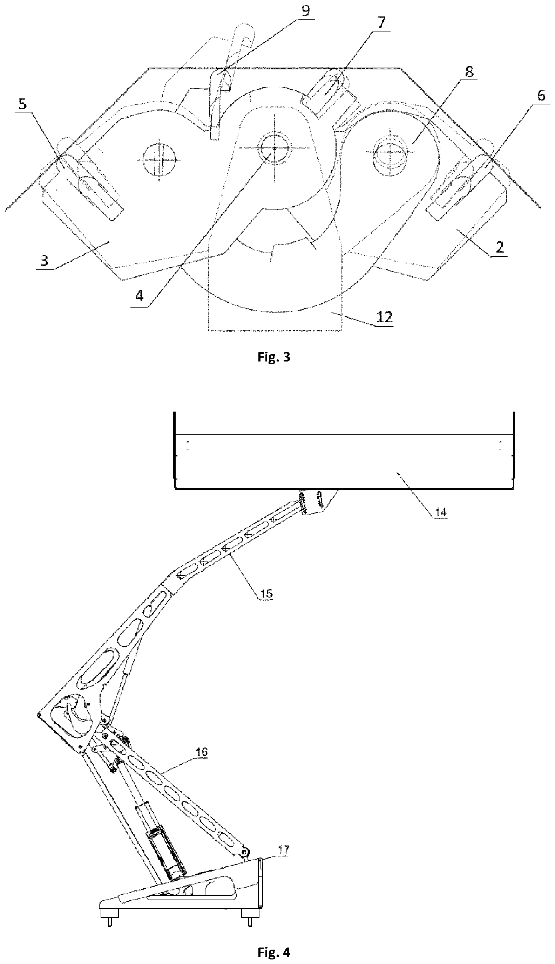

The position of elements of the head 1 when connecting the head to the charging station 1 is shown in Fig. 3, where the connected head 1 is represented by a solid line, and the dashed line marks the positions of the contacts with respect to the yoke 12 before connecting to the station.

When the head 1 is introduced into the charging channel 14 of the charging station, the arms 2, 3 together with the contacts fit appropriately into the geometry of the charging channel 14 and adhere to the conductive strips of the charging channel 14 due to the pivotal connection and the expanding force of the spring 10 coupling the arms 2, 3.

The first element coming into contact with the conductive strip of the charging station is the extended earthing contact 9, located on the rotatable third arm 8 provided with a spring 11. In other words, the extended position of the earthing contact 9 increases the likelihood of this earthing contact 9 contacting the conductive strip of the charging station before any electrical contact 5, 6 or communication contact 7, which eliminates the risk of connecting both electrical contacts 5, 6 to the charging station before the earthing is provided. The responses from the pressure of the earthing contact 9 generate a torque acting on the second arm 2 to which the arm 8 of the earthing contact 9 is attached, which is between 50 and 150% of the torque generated by the forces on the contact. The arms 2, 3 then rotate as a result of pressure against the charging channel 14, which allows the contacts 5, 6 to be connected to the conductive strips.

After the arms are bent, the head 1, being able to rotate in relation to the charging channel 14, assumes a nominal position for charging, ensuring contact and pressure against the power supply strips, and the communication contact 7 rises to a position in contact with the conductive strip, which initiates the charging process.

In an embodiment, the head 1 has a shape that guides along the inclined walls of the charging channel 14 into the zone with electrical contact elements.

The positioning means, for example limiters (not shown), which define the operating range of the electric contacts in the plane perpendicular to the axis of rotation, are located between the adjacent arms 2, 3 of the electrical contacts 5, 6. The limiters allow the arms 2, 3 to rotate by a value between 0 and 20° relative to each other and up to 10° in both directions with respect to the yoke 12 securing the head 1, only after the arms 2, 3 rotate in relation to each other. This allows the head 1 to adapt to the charging station, while maintaining the predefined distribution of pressure forces. Thus, the invention allows for achieving a greater range of deviations of the head from the charging station than was possible previously.

In the head 1 according to the invention, at least three contacts move interdependently, thus determining a safe connection and disconnection sequence. This was achieved due to a resilient element that positions the electrical contacts 5, 6 to a position that prevents the connection of the communication contact 7, until the appropriate contact of the electrical contacts 5, 6 and the earthing contact 9 is achieved.

The embodiment described here is not limiting. In another embodiment, the arms 2, 3 can be mounted on two axes parallel to each other but not positioned coaxially, or parallel to each other and coaxial, aligned with the direction of movement such as the axis 4 of rotation.

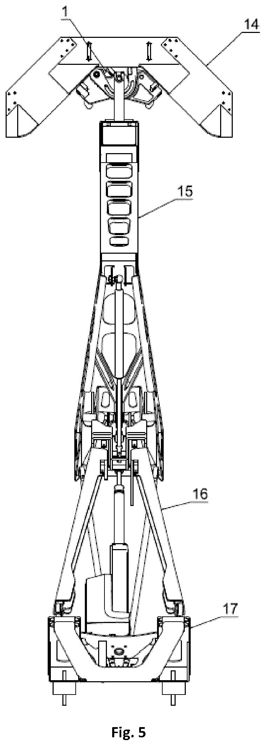

Fig. 4, and Fig. 5 show an embodiment of a rapid charging system according to the invention in a side view and a front view, respectively.

According to the embodiment, the rapid charging system consists of a current collector mounted on the roof of a vehicle, which collector has a contact head 1 as described above, and a stationary charging station with a charging channel 14 as part of the transport infrastructure, with a compatible contact device for connection of the contact head 1. The current collector has a frame 17 adapted to be mounted on a vehicle, consisting in one embodiment of two pairs of longitudinal members. The frame 17 is electrically insulated from the roof of the vehicle by, for example, electrical insulators and/or vibration isolators. The drive arm 16 (girder) is at one end pivotably bearing-mounted in the frame 17. In the embodiment, the drive arm 16 comprises a right-hand and a left-hand arm mounted with hinge joints to the longitudinal members. At the other end, the drive arm 16 is connected by a ball joint to the upper arm 15, with a contact head 1 installed at the end thereof. In the embodiment, at least one tension rod is bearing-mounted in the frame 17, which at one end is connected by a hinge joint to the upper arm 15, and at the other end to the frame 17 by a ball joint. The hinge joint is an articulated joint with one degree of freedom that enables rotation around a horizontal axis (perpendicular to the longitudinal axis of a vehicle) in a vertical plane.

The charging station can be located near the bus stop or start and end stations. The charging station is equipped with a compatible contact device that is used to connect to the contact head 1 of the current collector to form a conductive connection. The contact device of the charging station can be placed on a vertical pole or mast and a transverse beam by means of a rigid or movable handle. Another method is to mount to the stop shelter. In a preferred embodiment, the compatible contact device has the form of a charging channel 14 having an upper wall and two side walls. The upper wall is flat, rectangular in shape and horizontally oriented. The side edges of the upper wall connect to two side walls which run divergently from these side edges downwards, i.e. obliquely. On the inner surface of the side walls and the upper wall, there are longitudinal conductive strips oriented horizontally along the axis of the contact device or the axis of the vehicle, cooperating with the corresponding contacts of the contact head. Specifically, the earthing contact 9, positioned in an extended position on the third arm 8, is first connected to the conductive strip arranged on the inner surface of the upper wall, oriented horizontally along the axis of the contact device or the axis of the vehicle. Further, the arms 2, 3 rotate, as a result of this earthing contact 9 pressing against the conductive strip arranged on the upper wall. As a result, the electrical contacts 5, 6 come into contact with corresponding conductive strips that are arranged along the inner surface of the side walls, on two opposite sides of the charging channel 14. Then, the communication contact 7 rises and comes into contact with the conductive strip arranged along the upper wall on its inner surface, which initiates the charging process.

## Claims

1. A contact head for a current collector adapted for charging a vehicle equipped with an electric drive in rapid charging systems, comprising at least two oppositely arranged electrical contacts mounted on at least two pressing elements that are rotatably disposed on at least one axis of rotation with a limited angle of rotation and having at least one resilient element for pressing the electrical contacts against at least two conductive strips of a compatible contact device of a charging station, said conductive strips being arranged on opposite sides of the contact head and through which the power supply voltage is applied, whereas
the pressing elements are formed as opposing arms (2, 3) - a first arm (3) and a second arm (2);
at least one electrical contact (5) is provided on the first arm (3);
at least one electrical contact (6) is provided on the second arm (2);
**characterized in that**
at least one axis of rotation (4) around which the arms (2, 3) rotate is aligned essentially in the direction of the longitudinal axis of the vehicle, parallel to the direction of vehicle movement;
wherein to the second arm (2), on an axis (13) parallel to the at least one axis of rotation (4), a third arm (8) is rotatably attached through a resilient element, on said third arm (8) an earthing contact (9) is arranged, the earthing contact (9) being in an extended position and protruding beyond the boundary of the head (1), so that when connecting the head (1) to the charging station, the earthing contact (9) contacts the conductive strip as the first of all contacts;
wherein on one of the arms (2, 3), from the side facing the conductive strips, a communication contact (7) is provided.

2. The contact head according to claim 1, **wherein** the communication contact (7) is arranged on the first arm (3), on the opposite side of the axis of rotation of the first arm (3) with respect to the electrical contact (5) attached to the same first arm (3), so that the communication contact (7) contacts the conductive strip of the charging station only after the electrical contacts (5, 6) come into contact with it.

3. The contact head according to claim 1, **wherein** the communication contact (7) is arranged on the second arm (2), on the opposite side of the axis of rotation of the second arm (2) with respect to the electrical contact (6) attached to the same second arm (2), so that the communication contact (7) contacts the conductive strip of the charging station only after the electrical contacts (5, 6) come into contact with it.

4. The contact head according to claim 1 or 2 or 3, **wherein** the third arm (8) is made in the form of an arc running under at least one axis (4) of rotation and coming out on the opposite side of the head (1).

5. The contact head according to any claim 1 to 4, **wherein** the earthing contact (9) is arranged on the third arm (8) on the side opposite to the axis (13) that holds it.

6. The contact head according to any claim 1 to 5, **wherein** the at least one axis of rotation (4) is mounted in a yoke (12).

7. The contact head according to any claim 1 to 6, **wherein** it has only one axis of rotation (4).

8. The contact head according to any claim 1 to 7, **wherein** the adjacent arms (2, 3) are coupled to each other on the axis of rotation (4) by a spring (10) positioned therebetween in a pocket, so that the arms (2, 3) push off each other, wherein the spring (10) is preferably positioned longitudinally to the axis of the vehicle.

9. The contact head according to claim 8, **wherein** the spring (10) extends around the axis of rotation (4).

10. The contact head according to either claim 8 or 9, **wherein** the spring (10) is placed in the pocket and supported on the surfaces of the adjacent arms (2, 3).

11. The contact head according to any of the preceding claims, **wherein** the third arm (8) is provided with a spring (11), placed around the axis (13), on which it is rotatably mounted.

12. The contact head according to claim 11, **wherein** the spring (11) is placed in the pocket and supported on the surfaces of the second arm (2) and the third arm (8).

13. The contact head according to any of the preceding claims, **wherein** between the arms (2, 3) a limiter is arranged that determines the operating range of the contacts in the vertical plane perpendicular to the axis of rotation (4) to a value between 0 and 20°.

14. A rapid charging system for electrically driven vehicles, comprising:
a contact head;
a current collector installed on a vehicle, provided with a lifting and lowering drive and at least one articulated arm, at the end of which the contact head is attached;
a charging station being part of a stationary transport infrastructure with a compatible contact device for connecting the contact head and establishing a conductive connection, said contact device in the form of a charging channel having an upper wall which is essentially flat, rectangular in shape and horizontally oriented, and two converging side walls connected to side edges of the upper wall and pointing downwards, with longitudinal conductive strips oriented horizontally along the axis of the contact device or the axis of an vehicle on the inner surface of the side walls and the upper wall, cooperating with the corresponding contacts of the contact head,
**characterized in that** it has a contact head defined according to any claim 1 to 13.

15. A method for establishing an electrically conductive connection between conductive strips of a compatible contact device of a charging station and a contact head according to any claim 1 to 13, **characterized in that** electrical contacts move interdependently determining a safe connection and disconnection sequence, said method comprising the following steps:
an earthing contact (9), located on a third arm (8) and arranged in an extended position, beyond the boundary of the contact head (1), comes into contact with a conductive strip of a charging channel (14), which conductive strip is located on an upper wall;
responses from the pressure of the earthing contact (9) against the conductive strip generate a torque acting on a second arm (2) to which the third arm (8) with the earthing contact (9) is attached;
upon pressing against the conductive strips of the charging channel (14), the arms (2, 3) rotate and the electrical contacts (5, 6) connect to the corresponding conductive strips of the charging channel (14), which conductive strips are located along side walls of the charging channel;
the contact head (1) takes a nominal position for charging, ensuring contact and pressure against the conductive strips;
a communication contact (7) rises and comes into contact with the conductive strip oriented along the upper wall.

## Patentansprüche

1. Ein Kontaktkopf für einen Stromabnehmer zum Laden eines elektrisch angetriebenen Fahrzeugs in Schnellladesystemen, mit mindestens zwei einander gegenüberliegenden elektrischen Kontakten, die an mindestens zwei Andrückelementen angebracht sind, die um mindestens eine Drehachse mit begrenztem Drehwinkel drehbar angeordnet sind und mindestens ein federndes Element zum Andrücken der elektrischen Kontakte an mindestens zwei auf gegenüberliegenden Seiten des Kontaktkopfes angeordnete Leiterbahnen einer kompatiblen Kontaktvorrichtung einer Ladestation aufweisen, über die die Versorgungsspannung angelegt wird, wobei
die Andrückelemente als gegenüberliegende Arme (2, 3) ausgebildet sind - ein erster Arm (3) und ein zweiter Arm (2);
mindestens ein elektrischer Kontakt (5) am ersten Arm (3) vorgesehen ist;
mindestens ein elektrischer Kontakt (6) am zweiten Arm (2) vorgesehen ist;
**dadurch gekennzeichnet, dass**
mindestens eine Drehachse (4), um die sich die Arme (2, 3) drehen, im Wesentlichen in Richtung der Längsachse des Fahrzeugs ausgerichtet ist, parallel zur Bewegungsrichtung des Fahrzeugs;
wobei an dem zweiten Arm (2) auf einer Achse (13), die parallel zu der mindestens einen Drehachse (4) verläuft, ein dritter Arm (8) über ein federndes Element drehbar befestigt ist, wobei an dem dritten Arm (8) ein Erdungskontakt (9) angeordnet ist, wobei der Erdungskontakt (9) sich in einer ausgefahrenen Position befindet und über die Begrenzung des Kopfes (1) hinausragt, so dass der Erdungskontakt (9) beim Anschließen des Kopfes (1) an die Ladestation die Leiterbahn als erste aller Kontakte kontaktiert;
wobei an einem der Arme (2, 3) auf der den Leiterbahnen zugewandten Seite ein Kommunikationskontakt (7) vorgesehen ist.

2. Der Kontaktkopf nach Anspruch 1, **wobei** der Kommunikationskontakt (7) auf dem ersten Arm (3) auf der gegenüberliegenden Seite der Drehachse des ersten Arms (3) in Bezug auf den elektrischen Kontakt (5) angeordnet ist, der an demselben ersten Arm (3) angebracht ist, so dass der Kommunikationskontakt (7) die Leiterbahn der Ladestation erst kontaktiert, nachdem die elektrischen Kontakte (5, 6) mit ihr in Kontakt gekommen sind.

3. Der Kontaktkopf nach Anspruch 1, **wobei** der Kommunikationskontakt (7) auf dem zweiten Arm (2) auf der gegenüberliegenden Seite der Drehachse des zweiten Arms (2) in Bezug auf den elektrischen Kontakt (6) angeordnet ist, der an demselben zweiten Arm (2) angebracht ist, so dass der Kommunikationskontakt (7) die Leiterbahn der Ladestation erst kontaktiert, nachdem die elektrischen Kontakte (5, 6) mit ihr in Kontakt gekommen sind.

4. Der Kontaktkopf nach Anspruch 1 oder 2 oder 3, **wobei** der dritte Arm (8) in Form eines Bogens ausgeführt ist, der unter mindestens einer Drehachse (4) verläuft und auf der gegenüberliegenden Seite des Kopfes (1) austritt.

5. Der Kontaktkopf nach einem der Ansprüche 1 bis 4, **wobei** der Erdungskontakt (9) auf dem dritten Arm (8) auf der Seite gegenüber der Achse (13), die ihn hält, angeordnet ist.

6. Der Kontaktkopf nach einem der Ansprüche 1 bis 5, **wobei** die mindestens eine Drehachse (4) in einem Bügel (12) gelagert ist.

7. Der Kontaktkopf nach einem der Ansprüche 1 bis 6, **wobei** er nur eine Drehachse (4) aufweist.

8. Der Kontaktkopf nach einem der Ansprüche 1 bis 7, **wobei** die benachbarten Arme (2, *3) auf der* Drehachse (4) durch eine dazwischen in einer Tasche angeordnete Feder (10) miteinander gekoppelt sind, so dass sich die Arme (2, 3) gegenseitig abstoßen, wobei die Feder (10) vorzugsweise längs zur Achse des Fahrzeugs angeordnet ist.

9. Der Kontaktkopf nach Anspruch 8, **wobei** sich die Feder (10) um die Drehachse (4) herum erstreckt.

10. Der Kontaktkopf nach einem der Ansprüche 8 oder 9, **wobei** die Feder (10) in der Tasche angeordnet ist und sich auf den Oberflächen der benachbarten Arme (2, 3) abstützt.

11. Der Kontaktkopf nach einem der vorhergehenden Ansprüche, **wobei** der dritte Arm (8) mit einer Feder (11) versehen ist, die um die Achse (13), auf der er drehbar gelagert ist, angeordnet ist.

12. Kontaktkopf nach Anspruch 11, **wobei** die Feder (11) in der Tasche angeordnet ist und sich auf den Oberflächen des zweiten Arms (2) und des dritten Arms (8) abstützt.

13. Der Kontaktkopf nach einem der vorhergehenden Ansprüche, **wobei** zwischen den Armen (2, 3) ein Begrenzer angeordnet ist, der den Arbeitsbereich der Kontakte in der vertikalen Ebene senkrecht zur Drehachse (4) auf einen Wert zwischen 0 und 20° festlegt.

14. Ein Schnellladesystem für elektrisch angetriebene Fahrzeuge, das Folgendes umfasst:
einen Kontaktkopf;
einen an einem Fahrzeug installierten Stromabnehmer, der mit einem Hebe- und Senkantrieb und mindestens einem Gelenkarm versehen ist, an dessen Ende der Kontaktkopf befestigt ist;
eine Ladestation, die Teil einer stationären Verkehrsinfrastruktur ist, mit einem kompatiblen Kontaktgerät zum Anschließen des Kontaktkopfes und zum Herstellen einer leitenden Verbindung, wobei das Kontaktgerät in Form eines Ladekanals vorliegt, der eine im Wesentlichen flache, rechteckige und
horizontal ausgerichtete obere Wand und zwei konvergierende Seitenwände aufweist, die mit den Seitenkanten der oberen Wand verbunden sind und nach unten weisen, mit längs der Achse des Kontaktgeräts oder der Achse eines Fahrzeugs horizontal ausgerichteten Leiterbahnen auf der Innenfläche der Seitenwände und der oberen Wand, die mit den entsprechenden Kontakten des Kontaktkopfes zusammenwirken,
**dadurch gekennzeichnet, dass** sie einen nach einem der Ansprüche 1 bis 13 definierten Kontaktkopf aufweist.

15. Ein Verfahren zum Herstellen einer elektrisch leitenden Verbindung zwischen Leiterbahnen eines kompatiblen Kontaktgeräts einer Ladestation und einem Kontaktkopf nach einem der Ansprüche 1 bis 13, **dadurch gekennzeichnet, dass** sich elektrische Kontakte in Abhängigkeit voneinander bewegen, wodurch eine sichere Verbindungs- und Trennungssequenz bestimmt wird, wobei das Verfahren die folgenden Schritte umfasst:
ein Erdungskontakt (9), der sich an einem dritten Arm (8) befindet und in einer ausgefahrenen Position jenseits der Begrenzung des Kontaktkopfes (1) angeordnet ist, kommt mit einer Leiterbahn eines Ladekanals (14) in Kontakt, wobei sich die Leiterbahn an einer oberen Wand befindet;
Reaktionen auf den Druck des Erdungskontakts (9) gegen die Leiterbahn erzeugen ein Drehmoment, das auf einen zweiten Arm (2) wirkt, an dem der dritte Arm (8) mit dem Erdungskontakt (9) befestigt ist;
beim Drücken gegen die Leiterbahnen des Ladekanals (14) drehen sich die Arme (2, 3) und die elektrischen Kontakte (5, 6) verbinden sich mit den entsprechenden Leiterbahnen des Ladekanals (14), wobei die Leiterbahnen entlang der Seitenwände des Ladekanals angeordnet sind;
der Kontaktkopf (1) nimmt eine nominelle Position zum Aufladen ein und stellt den Kontakt und den Druck gegen die Leiterbahnen sicher;
ein Kommunikationskontakt (7) erhebt sich und kommt mit der Leiterbahn, die entlang der oberen Wand ausgerichtet ist, in Kontakt.

## Revendications

1. Une tête de contact pour un collecteur de courant adaptée pour charger un véhicule équipé d'une traction électrique dans des systèmes de charge rapide, comprenant au moins deux contacts électriques disposés de manière opposée montés sur au moins deux éléments de pression qui sont disposés de manière rotative sur au moins un axe de rotation avec un angle de rotation limité et ayant au moins un élément résilient pour presser les contacts électriques contre au moins deux bandes conductrices d'un dispositif de contact compatible d'une station de charge, lesdites bandes conductrices sont disposées sur les côtés opposés de la tête de contact et à travers lesquelles la tension d'alimentation est appliquée, tandis que
les éléments de pression sont formés sous forme de bras opposés (2, 3) - un premier bras (3) et un deuxième bras (2) ;
au moins un contact électrique (5) est prévu sur le premier bras (3) ;
au moins un contact électrique (6) est prévu sur le deuxième bras (2) ;
**caractérisée en ce que**
au moins un axe de rotation (4) autour duquel les bras (2,3) tournent est aligné essentiellement dans la direction de l'axe longitudinal du véhicule, parallèlement à la direction de déplacement du véhicule ;
dans laquelle un troisième bras (8) est fixé de manière rotative au deuxième bras (2), sur un axe (13) parallèle à l'au moins un axe de rotation (4), par l'intermédiaire d'un élément élastique, et un contact de mise à la terre (9) est disposé sur ledit troisième bras (8), le contact de mise à la terre (9) est dans une position étendue et fait saillie au-delà de la limite de la tête (1), de sorte que lors de la connexion de la tête (1) à la station de charge, le contact de mise à la terre (9) entre en contact avec la bande conductrice en tant que premier de tous les contacts ;
dans laquelle sur l'un des bras (2, 3), du côté opposé aux bandes conductrices, un contact de communication (7) est prévu.

2. La tête de contact selon la revendication 1, **dans laquelle** le contact de communication (7) est disposé sur le premier bras (3), du côté opposé à l'axe de rotation du premier bras (3) par rapport au contact électrique (5) fixé au même premier bras (3), de sorte que le contact de communication (7) entre en contact avec la bande conductrice de la station de charge seulement après que les contacts électriques (5, 6) entrent en contact avec elle.

3. La tête de contact selon la revendication 1, **dans laquelle** le contact de communication (7) est disposé sur le deuxième bras (2), du côté opposé à l'axe de rotation du deuxième bras (2) par rapport au contact électrique (6) fixé au même deuxième bras (2), de sorte que le contact de communication (7) entre en contact avec la bande conductrice de la station de charge seulement après que les contacts électriques (5, 6) entrent en contact avec elle.

4. La tête de contact selon la revendication 1 ou 2 ou 3, **dans laquelle** le troisième bras (8) est réalisé sous la forme d'un arc passant sous au moins un axe (4) de rotation et débouchant sur le côté opposé de la tête (1).

5. La tête de contact selon l'une des revendications 1 à 4, **dans laquelle** le contact de mise à la terre (9) est disposé sur le troisième bras (8) du côté opposé à l'axe (13) qui le maintient.

6. La tête de contact selon l'une des revendications 1 à 5, **dans laquelle** l'au moins un axe de rotation (4) est monté dans un étrier (12).

7. La tête de contact selon l'une des revendications 1 à 6, **dans laquelle** elle n'a qu'un seul axe de rotation (4).

8. La tête de contact selon l'une des revendications 1 à 7, **dans laquelle** les bras adjacents (2, 3) sont couplés l'un à l'autre sur l'axe de rotation (4) par un ressort (10) positionné entre eux dans une poche, de sorte que les bras (2, 3) se poussent l'un l'autre, le ressort (10) étant de préférence positionné longitudinalement par rapport à l'axe du véhicule.

9. La tête de contact selon la revendication 8, **dans laquelle** le ressort (10) s'étend autour de l'axe de rotation (4).

10. La tête de contact selon la revendication 8 ou 9, **dans laquelle** le ressort (10) est placé dans la poche et soutenu par les surfaces des bras adjacents (2, 3).

11. La tête de contact selon l'une des revendications précédentes, **dans laquelle** le troisième bras (8) est muni d'un ressort (11), placé autour de l'axe (13), sur lequel il est monté de manière rotative.

12. La tête de contact selon la revendication 11, **dans laquelle** le ressort (11) est placé dans la poche et soutenu par les surfaces du deuxième bras (2) et du troisième bras (8).

13. La tête de contact selon l'une des revendications précédentes, **dans laquelle** entre les bras (2, 3) est disposé un limiteur qui détermine la plage de fonctionnement des contacts dans le plan vertical perpendiculaire à l'axe de rotation (4) à une valeur comprise entre 0 et 20°.

14. Un système de charge rapide pour les véhicules électriques, comprenant :
une tête de contact ;
un collecteur de courant installé sur un véhicule, muni d'un entraînement de levage et d'abaissement et d'au moins un bras articulé, à l'extrémité duquel la tête de contact est fixée ;
une station de charge faisant partie d'une infrastructure de transport stationnaire avec un dispositif de contact compatible pour connecter la tête de contact et établir une connexion conductrice, ledit dispositif de contact sous forme d'un canal de charge ayant une paroi supérieure qui est essentiellement plate, de forme rectangulaire et
orientée horizontalement, et deux parois latérales convergentes connectées aux bords latéraux de la paroi supérieure et orientées vers le bas, avec des bandes conductrices longitudinales orientées horizontalement le long de l'axe du dispositif de contact ou de l'axe d'un véhicule sur la surface intérieure des parois latérales et de la paroi supérieure, coopérant avec les contacts correspondants de la tête de contact,
**caractérisé en ce qu'**il a une tête de contact définie selon l'une des revendications 1 à 13.

15. Un procédé pour établir une connexion électriquement conductrice entre les bandes conductrices d'un dispositif de contact compatible d'une station de charge et une tête de contact selon l'une des revendications 1 à 13, **caractérisé en ce que** les contacts électriques se déplacent de manière interdépendante en déterminant une séquence de connexion et de déconnexion sûre, ledit procédé comprenant les étapes suivantes :
un contact de mise à la terre (9), situé sur un troisième bras (8) et disposé dans une position étendue, au-delà de la limite de la tête de contact (1), entre en contact avec une bande conductrice d'un canal de charge (14), laquelle bande conductrice est située sur une paroi supérieure ;
les réponses de la pression du contact de mise à la terre (9) contre la bande conductrice génèrent un couple agissant sur un deuxième bras (2) auquel le troisième bras (8) avec le contact de mise à la terre (9) est fixé ;
en appuyant sur les bandes conductrices du canal de charge (14), les bras (2, 3) tournent et les contacts électriques (5, 6) se connectent aux bandes conductrices correspondantes du canal de charge (14), lesquelles bandes conductrices sont situées le long des parois latérales du canal de charge ;
la tête de contact (1) prend une position nominale pour le chargement, assurant le contact et la pression contre les bandes conductrices ;
un contact de communication (7) monte et entre en contact avec la bande conductrice orientée le long de la paroi supérieure.
